Europäisches Patentamt

European Patent Office

Office européen des brevets

(11) Veröffentlichungsnummer: **0 491 988 A1**

## (12) EUROPÄISCHE PATENTANMELDUNG

(21) Anmeldenummer: **90125555.4**

(22) Anmeldetag: **27.12.90**

(51) Int. Cl.5: **F16N 27/00**, G01F 11/04

(43) Veröffentlichungstag der Anmeldung:
**01.07.92 Patentblatt 92/27**

(84) Benannte Vertragsstaaten:
**AT DE FR GB IT**

(71) Anmelder: **TKMM "METALIK"**

**Stadt Pazardjik(BG)**

(72) Erfinder: **Yanakiev, Mihail Ivanov**
**Boul.9ti Septemvri 3-2**
**Pazardjik(BG)**

(74) Vertreter: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**W-8000 München 2(DE)**

(54) **Dosiereinrichtung für fluid.**

(57) Eine Dosiereinrichtung für Fluid, insbesondere zum Dosieren von Schmieröle,die eine exakte und sich wiederholende Dosierung der Fluidportionen,unabhängig von der Parameteränderung des Systems,in dem sie eingebaut ist, sichert und eine einfache und technologische Konstruktion aufweist und eine Unifizierung der Elemente aus der sie besteht, ermöglicht.

Die Dosiereinrichtung besteht aus einem Körper, in dem Eingangskanal [2] und Arbeitskammer [3] zentralliegend geformt sind, die ihrerseits durch eine Hohlmutter [7] mit zentralen stufenförmigen Durchgangsöffnung [9] geschloßen ist. In der Arbeitskammer [3] ist einen Unterfederplunger [5] locker montiert. Erfindungsgemäß ist der Übergang von der Arbeitskammer [3] zu den Eingangskanal [2] eine Kegelfläche [4].Solche Kegelfläche weist auch dazuliegende Oberfläche des Plungers.Dieser Plunger ist aus einem elastischen Material ausgearbeitet und von der Seite des Eingangskanal ist in ihm einen einseitig geöffneten Hohlraum geformt.

Fig.1

Die Erfindung betrifft eine Dosiereinrichtung für Fluid, insbesondere zum Dosieren von Schmieröle und ist zum Schmieren von Werkzeugmaschinen geeignet.

Es ist bereits eine Dosiereinrichtung dieser Art bekannt, die aus einem Körper besteht, in den sich Eingangskanal und mit ihm verbundene Arbeitskammer zentralliegend befinden,Die Arbeitskammer ist von einer Hohlmutter mit zentralen,stufenartigen Durchgangsöffnung geschloßen.In der Arbeitskammer und in der Öffnung der Hohlmutter befindet sich locker einen Plunger, der so spezifisch ist, daß seinem Grund einen größeren Durchmesser aufweist als der anderen, in der Öffnung der Hohlmutter sich befindenden Teil.Der Durchgang zwischen dem Grund und dem anderen Teil des Plungers ist kegelförmig.Die Verbindung zwischen dem Körper und der Hohlmutter ist gewindeartig und ist mit einem Verdichtungsring verdichtet.Der Plunger ist von der Seite der Hohlmutter durch eine Feder unterstützt.Es ist ein Kugelrückventil in der Hohlmutter vorgesehen./1/

Einen Nachteil dieser Dosiereinrichtung ist,daß mit ihm ein exaktes,genaues Dosieren des Fluides nicht gesichert ist, und diese in großen Grenzen in Abhängigkeit von der Spannungsgröße,von der eingebauten im System Dosiereinrichtungsanzahl, von der Viskosität,von der Temperatur und der Sauberkeit der Schmieröle u.s.w. variert.Bei verschiedenen Mengen de Dosierportion verändern sich in der Konstruktion die Abmessungen des Körpers, des Plungers und der anderen Bauelemente,das die Unifizierung der entsprechenden Elemente behindert.

Die Aufgabe der Erfindung ist eine Dosiereinrichtung für Fluid zu schaffen , die die exakte und sich wiederholende Dosieung der Fluidportionen, unabhängig von der Parameteränderungen des Systems, in dem sie eingebaut ist, sichert und eine einfache und technologische Konstruktion aufweist und eine Unifizierung der Elemente aus der sie besteht, ermöglicht.

Die Aufgabe wird erfindungsgemäß durch eine Dosiereinrichtung gelöst,die aus einem Körper besteht, in dem Eingangskanal und Arbeitskammer zentralliegend geförmt sind,die ihrerseits durch eine Hohlmutter mit zentralen stufenförmigen Durchgangsöffnung geschloßen ist.In der Arbeitskammer ist einen Unterfederplunger locker montiert.Erfindungsgemäß ist der Übergang von der Arbeitskammer zu den Eingangskanal eine Kegelfläche. Solche Kegelfläche weist auch die dazuliegende Oberfläche des Plungers.Dieser Plunger ist aus einem elastischen Material ausgearbeitet und von der Seite des Eingangskanal ist in ihm einen einseitig geöffneten Hohlraum geförmt.

In einer bevorzugten Erfindungsausführung ist das innere Ende des Plungers mit geformter Stufe ausgearbeitet, in der für den Plunger eine Gegenscheibe montiert ist.In der Hohlmutter ist einen konventionelen Kugelrückventil eingebaut.

In einer zweiten bevorzugten Erfindungsausführung ist in dem inneren Ende des Plungers einen zweiten Hohlraum geformt, der einseitig zu der Hohlmutter geöffnet ist, die einen Dorn-(vorspringendes Element) aufweist, der sich in der zweiten Hohlraum befindet.Die Außenfläche des Dorns,die sich in unmittelbaren Nähe des Hohlmuttergewinde befindet ist kegelförmig und in ihrer Ende ist sie zylindrisch.Der Durchmesser des zweiten Hohlraumes ist kleiner als der größten Durchmesser des kegelförmigen Teils des Dorns.

Erfindungsgemäß werden die Vorteile der Dosiereinrichtung vor allem durchdie spezifische Konstruktion des Plungers und durch das Material, aus den er ausgearbeitet ist, besimmt. Auf dieser Weise ist die Konstriktion vereinfacht und technologisch.Die Elastizität des Materials ,aus dem den Plunger ausgearbeitet ist, garantiert eine konstante Dose des zugeführten Öls, bei längeren Anwendung.Es ist eine maximale Unifizierung der Dosiereinrichtung bildenden Elemente möglich.

Anhand der beigefüg ten Zeichnungen wird ein Ausführungsbeispiel der Erfindung gezeigt,wobei:

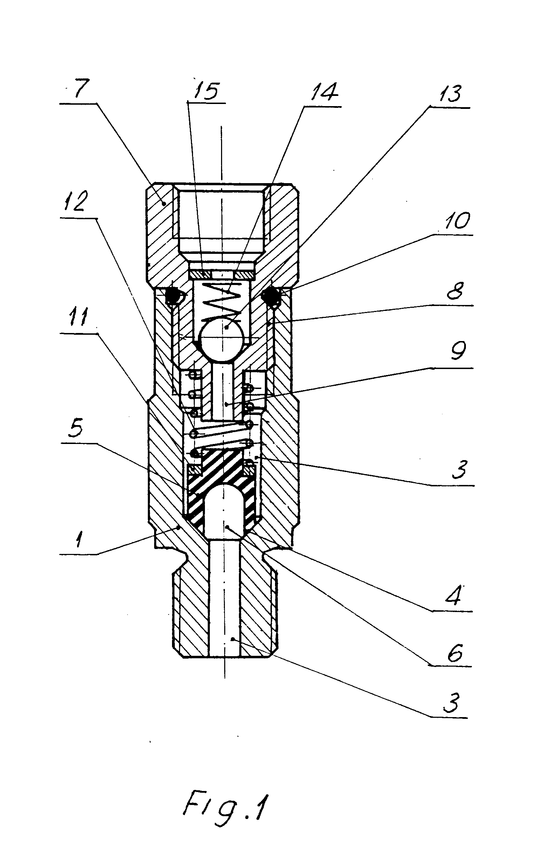

Figur 1    stellt einen Längsschnitt durch die Achse der Dosiereinrichtung mit in der Hohlmutter eingebauten Kugelrückventil ,dar.

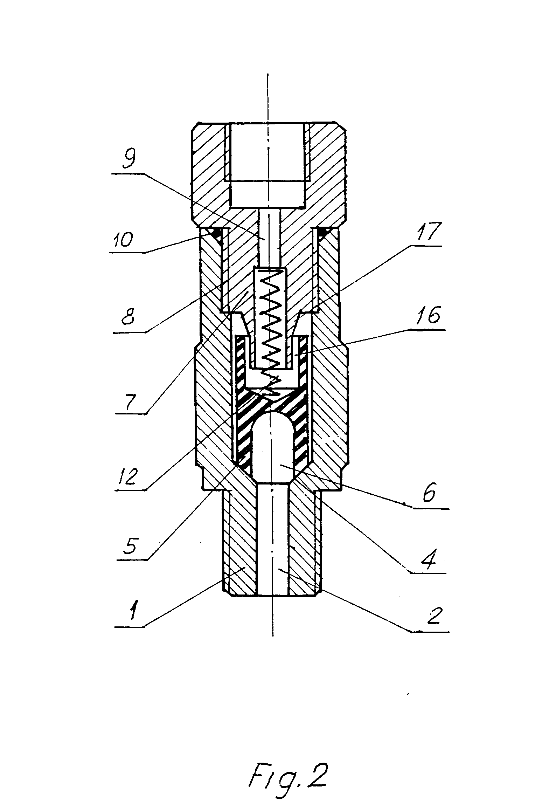

Figur 2    Längsschnitt durch die Achse der Dosiereinrichtung bei der zweiten Variantenausführung, ohne Rückventil.

Die Dosiereinrichtung besteht aus Körper 1,in dem Eingangskanal 2 und Arbeitskammer 3 axialliegend,geformt sind. Der Übergang zwischen den Eingangskanal 2 und der Arbeitskammer 3 ist eine Kegelfläche 4.In der Arbeitskammer 3 ist locker einen Plunger 5 montiert,der aus elasischen Material ausgearbeitet ist.In dem Plunger 5 ist einen einseitig geöffneten zu den Eingangkanal2 Hohlraum 6 geformt und die Fläche aus dieser Seite des Plungers 5 ist identisch mit der Kegelfläche 4. Die Arbeitskammer 3 der Dosiereinrichtung ist durch eine auf Außengewinde 8 montierte Hohlmutter 7 geschloßen.Die Hohlmutter weist eine zentrale stufenförmige Durchgangsöffnung 9 auf und ist zu dem Körper 1 durch den Verdichtungsring 10 verdichtet.

In der einer Variantenausführung der Dosiereinrichtung ist der Plunger 5 von der Seite der Hohlmutter 7 mit einer Stufe geformt, in der Die Scheibe 11 montiert ist. Zu der Scheibe 11 ist die Feder 12 gestützt und derren andere Ende in der Mutter 7 gesteckt ist.In der Hohlmutter 7 selbst ist ein konventionelen Kugelrückventil montiert,das aus Kugel 13, Feder 14 und Gegenscheibe 15 besteht.

In der zweiten Ausführung der Dosiereinrichtung ist in dem Plunger 5 von der Seite der Hohlmutter 7 einseitig geöffneten zweiten Hohlraum 16 geformt.Die Feder 12 ist zentral in dem zweiten Hohlraum 16 des Plungers 5 und in der einen Stufe der Durchgangsöffnung 9 der Hohlmutter 7 gelegen. Die Hohlmutter 7 ist von der Seite des Plungers 5 mit einem geformten Dorn 17 versehen,dessen in unmittelbaren Nähe des Gewindes 8 sich befindende Außenfläche kegelförmig ist und an ihrer andere Ende zylindrisch ist.Der Durchmesser des zylindrischen Teil des Dornes 17 ist kleiner als der größten Durchmesser des kegelförmigen Teils des Dornes 17. Der Dorn 17 selbst befindet sich teilweise in dem zweiten Hohlraum 16.

Die Dosiereinrichtung funktioniert wie folgt: Beim Zuführen des Schmieröls von der Pumpe wird es in den Eingangskanal 2 eintretten und gelangt in den Hohlraum 6 des Plungers 5.Infolge der Druckerhöhung werden die Wände des Hohlraumes 6 zu den Wände der Arbeitskammer 3 gedrückt, wobei auf dieser Weise wird den Plunger in der Arbeitskammer 3 verdichtet und funktioniert als ein Kolben.Wenn der Druck des zugeführten Schmieröls größer als die Federkraft 12, die den Plunger 5 zu der Kegelfläche 4 drückt, ist,dann versetzt sich der Plunger 5 zur Hohlmutter 7,wobei das sich in der Arbeitskammer sich befindenden Öl durch die Öffnung 9 der Hohlmutter 7 ausgestoßen wird.Dieses dauert bis zu dem der Plunger 5 stoßt auf den Eingang der zentralen stufenförmigen Durchgangsöffnung 9 der Hohlmutter 7 auf.In dieser Lage wird der Druck des zugeführten Öls steil zunehmen und die Pumpe hört auf zu funktionieren. Es folgt einen Druckabfall in der Arbeitskammer 3 und wird den Plunger, unter der Einwirkung der Feder 12 in die Ausgangslage zurückgeführt, wobei in dem Raum hinter ihm, in die Arbeitskammer 3 Öl eindringt, wegen des Fakts, daß die Wände des Hohlraumes 6 des Plungers 5 zusammengezogen sind.

In der ersten Variante wird von dem montierten Rückventil in die Öffnung 9 der Hohlmutter 7, das zugeführten Öl des Plungers durchgelassen.Im Moment des Zuschließens der Öffnung 9 vom Plunger 5 wird von dem Rückventil dei selbe Öffnung 9 gegen den Rückfluß des Öls von seiner Ausgangsseite der Dosiereinrichtung,zugeschloßen .Dieses schafft Bedingungen zum wertvollen Ausfüllen der Arbeitskammer 3 mit einer neuen Ölportion.

Bei der zweiten Erfindungsvariante stoßt der Plunger 5 mit dem Ende seines zweiten Hohlraumes 16 in die Kegelfläche des Dornes 17 der Hohlmutter 7.Wegen der Elastizität des Plungers 5 werden seinen Enden die Kegelfläche des Dornes 17 umfaßen und sie werden den Ölstrom zu der Durchgangsöffnung 9 der Hohlmutter 7 unterbrechen.In dieser Lage hört die Pumpe auf zu funktionieren und wird der Druck in der Arbeitskammer 3 herabgesetzt.Die Feder 12 strebt nach Zurückbringen des Plungers 5 in die Ausgangslage und die Enden des ersten Hohlraumes 6 werden zusammengezogen und das Öl füllt die Arbeitskammer 3 aus. Ausgehend werden die Enden des zweiten Hohlraumes 16 des Plungers 5 den Dorn 17 weiter dicht umfaßen, wobei sie eine Rolle des Rückventils spielen, haltend so das schön ausgestoßenen Öl, daß es nicht in die Arbeitskammer 3 eindringt,bevor sie mit der neuen Portion Öl aufgefüllt ist. Nach dem Druckausgleich seitlich des Plungers 5,werden die Enden des zweiten Hohlraumes 16 des Plungers 5 von der Wänden des Dornes 17 getrennt und der Plunger 5 wird in die Ausgangslage gebracht.

Die Erfindung betrifft eine Dosiereinrichtung für Fluid, insbesondere zum Dosieren von Schmieröle,die eine exakte und sich wiederholende Dosierung der Fluidportionen,unabhängig von der Parameteränderung des Systems,in dem sie eingebaut ist, sichert und eine einfache und technologische Konstruktion aufweist und eine Unifizierung der Elemente aus der sie besteht, ermöglicht.

Die Dosiereinrichtung besteht aus einem Körper, in dem Eingangskanal und Arbeitskammer zentralliegend geformt sind, die ihrerseits durch eine Hohlmutter mit zentralen stufenförmigen Durchgangsöffnung geschloßen ist. In der Arbeitskammer ist einen Unterfederplunger locker montiert.Erfindungsgemäß ist der Übergang von der Arbeitskammer zu den Eingangskanal eine Kegelfläche.Solche Kegelfläche weist auch dazuliegende Oberfläche des Plungers.Dieser Plunger ist aus einem elastischen Material ausgearbeitet und von der Seite des Eingangskanal ist in ihm einen einseitig geöffneten Hohlraum geformt.

Es sind zwei Erfindungsausführungen in der Beschreibung erläutert.

**Patentansprüche**

1. Dosiereinrichtung für Fluid,die einen Körper umschließt, in den Eingangskanal und Arbeitskammer zentralliegend geförmt sind,die ihrerseits durch einen mit zentralen stufenförmigen Durchgangsöffnung versehen Hohlmutter geschloßen ist,wobei in der Arbeitskammer einen Unterfederplunger locker montiert ist, dadurch **gekennzeichnet**, daß der Übergang zwischen der Arbeitskammer /3/ und den Eingangskanal /2/ eine Kegelfläche /4/ ist,die identisch mit der dazuliegenden Oberfläche des Plungers /5/ ist, wobei er aus elastschen Material ausgearbeitet ist und in dem einen zylindrischen einseitig geöffneten zu dem Eingangskanal /2/, Hohlraum /6/ geformt ist.

**2.** Dosiereinrichtung nach Anspruch 1,dadurch **gekennzeichnet**,daß in dem inneren Ende des Plungers /5/ eine Stufe geformt ist, zu der seine Feder stützt, wobei in der zentralen stufenförmigen Durchgangsöffnung /9/ der Hohlmutter/7/ einen konventionelen Kugelrückventil montiert ist.

**3.** Dosiereinrichtung nach Anspruch 1,dadurch **gekennzeichnet**,daß in dem inneren Ende des Plunger/5/ einen zweiten, einseitig geöffneten zu der Hohlmutter /7/,Hohlraum /16/ geformt ist,wobei die Hohlmutter einen Dorn/17/ aufweist,dessen Außenfläche in der Nähe des Gewindes/8/ der Hohlmutter /7 /kegelförmig ist und am Ende zylindrisch ist,bei dem sich der Dorn /17/ in dem Hohlraum /16/befindet,wobei der Durchmeßer des zweiten Hohlraumes/16/ kleiner als der größten Durchmeßer des kegelförmigen Teils des Dornes/17/ist.

**LITERATUR:**

1. Urheberschein der VRBulgarien No.40 266

Fig.1

EP 0 491 988 A1

Fig. 2

6

Europäisches
Patentamt

**EUROPÄISCHER RECHERCHENBERICHT**

Nummer der Anmeldung

EP    90 12 5555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-791455 (SATZGER) <br> * das ganze Dokument * <br> --- | 1, 3 | F16N27/00 <br> G01F11/04 |
| A | US-A-1837811 (FARMER) <br> * das ganze Dokument * <br> ----- | 1, 2 | |

**RECHERCHIERTE SACHGEBIETE (Int. Cl.5)**

F16N
G01F

Der vorliegende Recherchenbericht wurde für alle Patentansprüche erstellt

| Recherchenort | Abschlußdatum der Recherche | Prüfer |
|---|---|---|
| DEN HAAG | 02 JULI 1991 | KOOIJMAN F.G.M. |